# FASCICULE DE BREVET EUROPEEN

(11) **EP 2 963 184 B1**
(45) Date de publication et mention de la délivrance du brevet: **08.03.2017**
(21) Numéro de dépôt: 15175196.3
(22) Date de dépôt: 03.07.2015
(51) Int. Cl.: E02D 1/02, E02D 7/06, G01N 3/34, G01N 3/42

(54) **PENETROMETRE DYNAMIQUE LOURD ET METHODE POUR DETERMINER LA HAUTEUR DE CHUTE D'UN MARTEAU APPARTENANT A UN TEL PENETROMETRE**
SCHWERER DYNAMISCHER PENETROMETER, UND METHODE ZUM BESTIMMEN DER FALLHÖHE EINES HAMMERS, DER ZU DIESEM PENETROMETER GEHÖRT
HEAVY DYNAMIC PENETROMETER AND METHOD FOR DETERMINING THE HEIGHT OF THE FALL OF A HAMMER BELONGING TO SUCH A PENETROMETER

(30) Priorité: 04.07.2014 FR 1456438
(43) Date de publication de la demande: 06.01.2016
(73) Titulaire: Sol Solution, 63200 Riom (FR)
(72) Inventeur: BENZ NAVARRETE, Miguel, 63000 CLERMONT-FERRAND (FR); GOURVES, Roland, 63200 MARSAT (FR)
(74) Mandataire: Lavoix

(56) Documents cités:
- EP-A1- 0 252 863
- FR-A1- 2 987 444

## Description

L'invention concerne un pénétromètre dynamique lourd et une méthode pour déterminer, lors d'un essai, la hauteur de chute à appliquer à un marteau appartenant à un tel pénétromètre en fonction de la compacité du sol.

Les pénétromètres dynamiques lourds sont couramment utilisés dans les travaux de reconnaissance géotechnique des sols. Plus particulièrement, ces pénétromètres sont généralement employés pour mesurer la compacité des sols durs, comme les sols de fondation.

FR-A-2 987 444 divulgue notamment un type de pénétromètre dynamique lourd, qui est commercialisé par la société SOL SOLUTION. Ce pénétromètre comprend un châssis équipé de chenilles de déplacement sur la surface du sol. Un mât est monté sur le châssis. Ce mât est positionné sensiblement à la verticale lors d'un essai et est généralement articulé sur le châssis. Le pénétromètre comporte également un train de tiges, à l'extrémité duquel est installée une pointe de pénétration dans le sol. Une enclume est en appui contre le train de tiges, à l'extrémité opposée à la pointe et un marteau est prévu pour battre l'enclume. Ce marteau a par exemple une masse d'environ 64 Kg et est lâché, lors d'un essai, à une hauteur constante d'environ 75 cm, pour entraîner l'enfoncement du train de tiges dans le sol. La masse est élevée à sa hauteur de chute par l'intermédiaire d'un vérin et un capteur de mesure est intégré au pénétromètre pour mesurer l'enfoncement de la pointe dans le sol.

Un tel pénétromètre est dit à énergie de battage constante car la hauteur de chute et la masse du marteau ne peuvent pas être modifiées par l'utilisateur.

L'inconvénient d'un pénétromètre à énergie de battage constante est qu'il n'est pas capable de détecter les couches de sol « mou », qui posent notamment des problèmes aux ingénieurs géotechniciens. En effet, une importante quantité d'énergie libérée lors de l'impact du marteau sur l'enclume engendre un enfoncement très important de la pointe dans le sol, si bien que les couches localisées de sol « mou » ne sont pas détectées lors d'un essai.

Pour pallier cet inconvénient, certains pénétromètres sont équipés d'un marteau à masse modulable, c'est-à-dire que l'utilisateur peut ajouter ou enlever des portions du marteau pour faire varier l'énergie de battage du marteau sur l'enclume.

De même, d'autres modèles de pénétromètres offrent la possibilité de faire varier la hauteur de chute du marteau en ajoutant ou en retirant des entretoises au-dessus de l'enclume.

Cependant, les opérations consistant à faire varier manuellement la masse du marteau ou la hauteur de chute du marteau obligent à arrêter le sondage puisqu'il convient notamment d'ouvrir la cage de sécurité à l'intérieur de laquelle coulisse le marteau. Ceci a pour conséquence l'augmentation du temps de sondage et un risque de blessure de l'opérateur durant l'intervention. De plus, le fait de retirer ou d'ajouter des modules au marteau pour modifier sa masse change la géométrie du marteau et peut perturber la mesure de l'enfoncement de la pointe dans le sol. Il convient alors de recalibrer les capteurs à chaque changement de géométrie du marteau.

C'est à ces inconvénients qu'entend plus particulièrement remédier l'invention en proposant un pénétromètre dynamique lourd dans lequel l'énergie de battage du marteau sur l'enclume est ajustée automatiquement à chaque essai en fonction de la nature du sol sondé.

A cet effet l'invention concerne un pénétromètre dynamique lourd, comprenant un châssis, un mât, monté sur le châssis et positionné sensiblement à la verticale lors d'un essai, un train de tiges, comportant une pointe de pénétration dans le sol, qui est disposée à une extrémité du train de tiges, une enclume, qui est en appui contre le train de tiges, à une extrémité opposée à la pointe, un marteau de battage de l'enclume, des moyens d'élévation du marteau le long du mât jusqu'à une hauteur de chute, à laquelle le marteau est lâché et des moyens de mesure de l'enfoncement de la pointe dans le sol. Conformément à l'invention, le pénétromètre comprend en outre une unité électronique de commande de la hauteur de chute du marteau, qui est configurée pour sélectionner, parmi plusieurs valeurs prédéterminées, la hauteur de chute à adopter pour l'essai en fonction de l'enfoncement de la pointe mesuré par les moyens de mesure lors d'un ou plusieurs essais antérieurs, et des moyens mécaniques de déclenchement de la chute du marteau, qui sont pilotés par l'unité électronique pour que le marteau soit lâché à la hauteur sélectionnée par l'unité électronique de commande.

Grâce à l'invention, la hauteur de chute du marteau peut être ajustée automatiquement par les moyens mécaniques de déclenchement de la chute du marteau, sous commande de l'unité électronique. De plus, la hauteur de chute est sélectionnée en fonction de l'enfoncement de la pointe mesuré lors du ou des essais antérieurs. La hauteur de chute est choisie parmi plusieurs valeurs déterminées, pour obtenir une valeur d'enfoncement optimale, ou au moins située dans un intervalle de confiance, c'est-à-dire dans un intervalle pour lequel l'essai pénétromètrique est fiable.

Selon des aspects avantageux mais non obligatoires de l'invention, un pénétromètre dynamique lourd peut incorporer une ou plusieurs des caractéristiques suivantes, prises dans toute combinaison techniquement admissible :
- Les moyens d'élévation du marteau comprennent un taquet de support du marteau et les moyens mécaniques de déclenchement comprennent des fenêtres de dégagement du taquet, qui sont réparties sur la hauteur du mât et qui sont respectivement situées à différentes hauteurs correspondant auxdites valeurs prédéterminées, et en ce que l'unité électronique commande l'ouverture des fenêtres.
- Les fenêtres comprennent chacune un battant articulé sur le mât et en ce que les moyens mécaniques de déclenchement comprennent, en outre, des verrous de blocage sélectif de l'ouverture du battant des fenêtres, qui sont pilotés par l'unité électronique de commande.
- Les verrous comprennent chacun un doigt qui est mobile en translation pour sélectivement bloquer le mouvement d'ouverture du battant de la fenêtre.
- Les verrous comprennent chacun un ressort, configuré pour pousser le doigt contre une surface du battant, sous commande de l'unité électronique.
- Les moyens d'élévation du marteau comprennent, en outre, deux chaines de traction du taquet et en ce que le taquet est lié de manière basculante aux chaines et bascule sous le poids du marteau dans une fenêtre ouverte lorsqu'il parvient à hauteur de celle-ci.
- Le mât comporte des moyens de rappel automatique du battant des fenêtres dans une position fermée.
- Les moyens de rappel automatique incluent une charnière de basculement du battant et un ressort de rappel du battant en position fermé, qui est enroulé autour de la charnière.
- Le taquet comprend des roulements d'appui sur le mât, pour s'élever le long de celui-ci.

L'invention concerne également une méthode pour déterminer, lors d'un essai, la hauteur de chute d'un marteau appartenant à un pénétromètre tel que décrit précédemment. Conformément à l'invention, cette méthode comprend des étapes consistant à:
a) mesurer l'enfoncement de la pointe dans le sol lors d'un ou plusieurs essais pour lesquels la hauteur de chute du marteau constante,
b) en fonction de l'enfoncement mesuré à l'étape a), sélectionner une nouvelle hauteur de chute pour le marteau parmi les valeurs prédéterminées.

L'invention et d'autres avantages de celle-ci apparaîtront plus clairement à la lumière de la description qui va suivre d'un mode de réalisation d'un pénétromètre dynamique lourd conforme à son principe, donnée uniquement à titre d'exemple et faite en référence aux dessins dans lesquels :
- la figure 1 est une vue en perspective d'un pénétromètre dynamique lourd conforme à l'invention,
- la figure 2 est une vue en perspective d'un taquet de support d'un marteau appartenant au pénétromètre de la figure 1,
- la figure 3 est une coupe partielle illustrant la montée du marteau le long d'un mât, dans laquelle le taquet supporte le marteau et roule le long du mât,
- la figure 4 est une coupe analogue à la figure 3 dans laquelle le taquet bascule dans une fenêtre du mât sous le poids du marteau,
- la figure 5 est une vue partielle et de côté du mât, illustrant une fenêtre fermée, qui est bloquée par des verrous,
- la figure 6 est une coupe d'un verrou en configuration rétractée,
- la figure 7 est une coupe analogue à la figure 6 d'un verrou en configuration déployée, et
- la figure 8 est un schéma illustrant un algorithme permettant de déterminer, lors d'un essai, une hauteur de chute à appliquer au marteau.

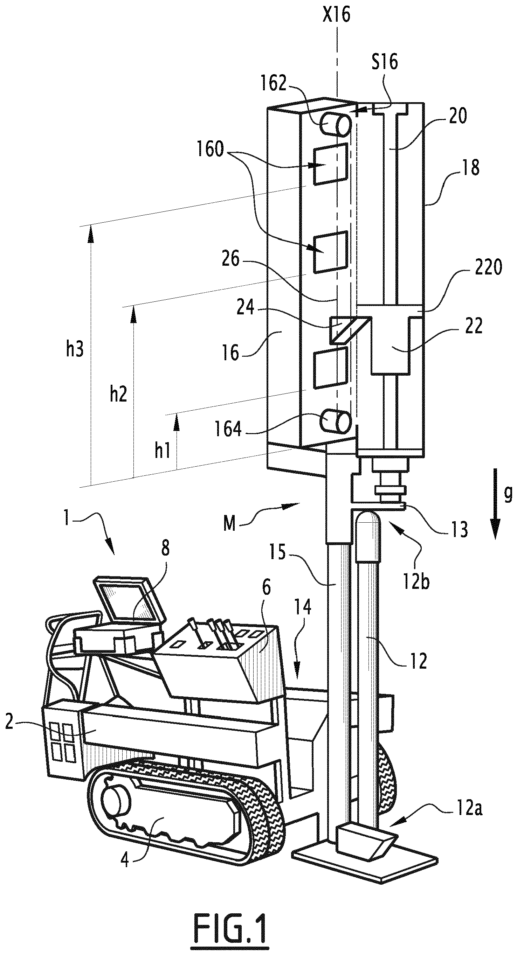

Sur la figure 1 est représenté un pénétromètre dynamique lourd 1. Ce pénétromètre 1 comprend un châssis 2 qui est équipé de chenilles 4 lui permettant de se déplacer sur la surface du sol. En variante non représentée, le pénétromètre 1 peut aussi être installé dans la remorque d'un véhicule.

Un mât M est articulé sur le châssis 2. Ce mât M est positionné sensiblement à la verticale lors d'un essai de sondage. En effet, certains essais requièrent une légère inclinaison du mât par rapport à la direction verticale. Dans ce document, la direction verticale est définie comme une direction parallèle au champ de gravité g et les directions « haut » et « bas » doivent être interprétées par rapport à cette direction verticale. Le mât M est généralement rétractable et est basculé dans un logement 14 du châssis 2 lorsque le pénétromètre 1 n'est pas utilisé. De cette manière, il est possible de replier le pénétromètre 1 pour le placer, par exemple, dans la partie d'un camion ou d'un utilitaire.

Le mât M comprend une partie inférieure 15 et une partie supérieure 16. La partie supérieure 16 est creuse et s'étend selon un axe X16. Elle délimite plusieurs fenêtres rectangulaires 160, réparties sur la hauteur du mât. Plus précisément, les fenêtres 160 sont alignées dans le sens de la hauteur et sont délimitées sur une paroi S16 de la partie 16. Lors d'un sondage, l'axe X16 est sensiblement vertical. Dans l'exemple, la partie 16 du mât M délimite trois fenêtres 160, qui sont respectivement disposées à des hauteurs h1, h2 et h3 mesurées à partir du bas de la partie 16, parallèlement à l'axe X16. Cependant, à titre de variantes non représentées, la partie 16 peut très bien comporter deux fenêtres ou plus de trois fenêtres.

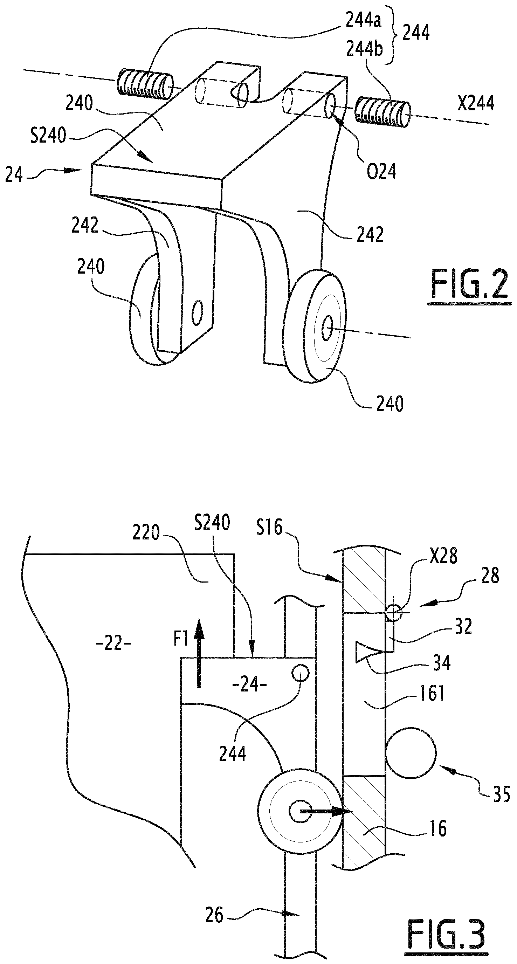

Comme visible à la figure 3, les fenêtres 160 comprennent chacune un battant 161. Ci-après est décrite une seule fenêtre puisque les fenêtres 160 sont toutes identiques.

Le battant 161 est articulé sur la partie 16 autour d'une charnière 28. La charnière 28 a un axe de rotation X28 qui est perpendiculaire à l'axe X16. Lors d'un essai, les axes de rotation X28 sont horizontaux. Le battant 161 est articulé avec la partie 16 au niveau d'un bord supérieur de la fenêtre 160 et la charnière 28 est disposée sur une paroi interne de la partie 16, c'est-à-dire du côté opposé à la paroi S16. Ainsi, le basculement du battant 161 se fait vers l'intérieur de la partie 16 du mât M.

Par ailleurs, la charnière 28 est liée au battant 161 par un rivet 34 fixé dans le battant, perpendiculairement à l'épaisseur du battant. Ce rivet 34 est lié à la charnière 28 par une languette 32 et un ressort non représenté est enroulé autour de la charnière 28, pour exercer un couple élastique de fermeture du battant 161. En d'autres termes, le ressort s'oppose à l'ouverture du battant 161.

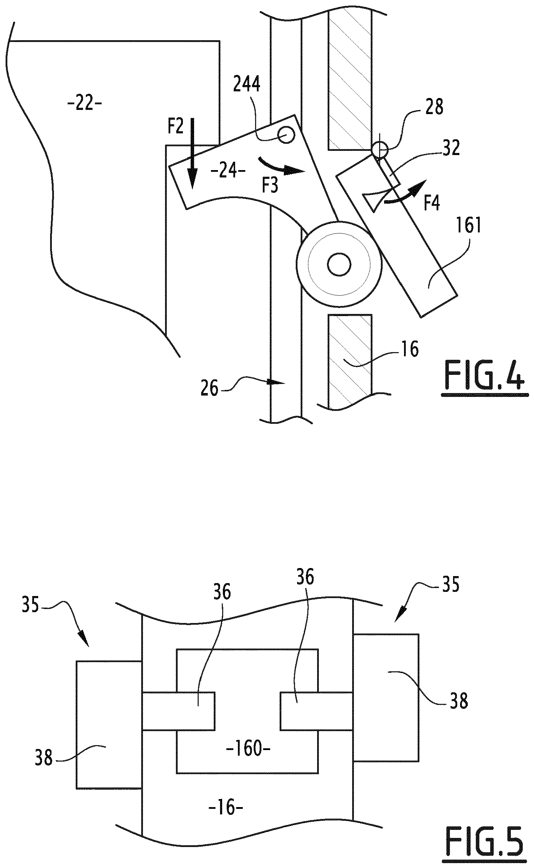

De plus, deux verrous 35 sont prévus au niveau de chaque fenêtre 160 pour bloquer le mouvement d'ouverture du battant 161. Comme visible à la figure 5, ces deux verrous sont disposés chacun sur une paroi latérale de la partie 16, c'est-à-dire sur une paroi ayant sa plus grande arrête commune avec celle de la paroi S16. En configuration bloquée, les verrous 35 s'opposent à la rotation du battant 161 et en configuration débloquée, les verrous 35 ne s'opposent pas à la rotation du battant 161. Comme visible aux figures 5 à 7, les verrous 35 comportent chacun un boîtier 38, qui est fixé sur la partie 16 et un doigt 36 de blocage de l'ouverture du battant 161. Le doigt 36 de chaque verrou 38 est soumis à l'action de charge élastique d'un ressort 40. La partie 16 est pourvue d'ouvertures de passage pour les doigts 36. En configuration bloquée des verrous 35, les doigts 36 sont déployés à travers les ouvertures de la partie 16 à l'intérieur de celle-ci pour venir au contact de la surface intérieure du battant 161. Les doigts 36 forment alors un obstacle au basculement du battant 161 de la fenêtre 160.

Le pénétromètre 1 comprend également un train de tiges 12 qui est logé dans une coque protectrice. Ce train de tiges 12 comprend plusieurs tiges, ou barres rectilignes, qui sont agencées axialement les unes avec les autres, parallèlement au mât M. Le train de tiges 12 comprend, au niveau d'une extrémité inférieure 12a, une pointe conique de pénétration dans le sol. Cette pointe n'est pas visible à la figure 1. Une extrémité supérieure 12b du train de tiges 12 forme une tête de battage, qui est disposée en dessous d'une enclume 13 en configuration d'essai.

Un marteau 22 est prévu pour chuter sur l'enclume 13 de manière à transmettre, par l'intermédiaire de la tête de battage, une énergie de battage au train de tiges 12. Cette énergie de battage est proportionnelle à la masse du marteau 22 et à la hauteur de chute de ce dernier. Le marteau 22 est soulevé par un taquet 24, qui prend appui sur une couronne supérieure 220 du marteau 222. En pratique, le marteau 22 a une masse égale à 63,5 Kg. Le marteau 22 est mobile autour et le long d'une barre guide 20 qui, en service, est sensiblement verticale. Le déplacement du marteau 22 s'effectue dans une cage de sécurité 18.

Le taquet 24 est entraîné en translation selon une direction verticale au moyen d'un système de poulies comprenant deux chaînes 26, une poulie motrice 162, qui est disposée en partie haute du mât 16 et une poulie menée 164, qui est disposée en partie basse du mât 16. Pour la clarté du dessin, les deux chaines sont représentées symboliquement par une ligne en trait interrompu à la figure 1. Les deux chaines 26 s'étendent parallèlement l'une à l'autre entre la poulie motrice 162 et la poulie menée 164. Le taquet 24 est entraîné en déplacement par les chaînes 26 le long de la surface S16.

Comme visible à la figure 2, le taquet 24 comprend une base supérieure 240 ayant une surface supérieure S240 de support du marteau 22. En pratique, la surface S240 est en contact avec une surface inférieure de la couronne 220 du marteau 22. Le taquet 24 comprend deux parois 242 qui s'étendent vers le bas à partir de la base 240, perpendiculairement à cette dernière. Ces deux parois 242 sont parallèles l'une à l'autre et sont chacune pourvues d'un roulement 240 pour rouler au contact de la surface S16 de la partie 16. Les roulements 240 sont préférentiellement des roulements à billes. Le taquet 24 est attaché aux chaînes 26 par l'intermédiaire de deux bouts d'arbre 244a et 244b, qui sont chacun insérés dans un logement latéral 024 du taquet 24. Les bouts d'arbres 244a et 244b sont, d'une part, immobilisés dans les logements 024 et sont, d'autre part, insérés chacun dans un oeillet d'une chaine 26. Par exemple, les bouts d'arbre 244a et 244b peuvent être vissés dans des taraudages du taquet 24, disposés de manière analogue aux logements 024.

Par ailleurs, les bouts d'arbre 244a et 244b forment ensemble un arbre 244 de basculement du taquet 24 par rapport aux chaînes 26. On définit un axe X244 de basculement du taquet 24 autour de l'arbre 244. L'axe X244 est un axe horizontal en configuration d'essai du pénétromètre 1, qui est parallèle aux axes X28 de basculement des battants 161 des fenêtres 160.

Le pénétromètre comprend également une unité électronique de commande 6, ayant la forme d'un pupitre monté sur le châssis 2. Le pupitre de commande 6 est équipé de plusieurs leviers et boutons d'actionnement, permettant à l'utilisateur d'activer manuellement les différentes fonctionnalités du pénétromètre 1. En particulier, l'utilisateur peut commander le basculement du mât 16 ou encore la montée du marteau 22 au moyen du pupitre 6. En outre, l'unité de commande 6 inclut un calculateur, qui résout à chaque essai un algorithme pour déterminer une hauteur de chute appropriée en fonction de la nature du sol sondé. Cet algorithme est expliqué plus en détail ci-dessous.

Par ailleurs, le pénétromètre 1 est également équipé de moyens de mesure de l'enfoncement du train de tiges 12 dans le sol. Ces moyens de mesure incluent par exemple un capteur optique non représenté sur les figures, qui est décrit dans FR-A-2 817 344. Ce capteur optique est porté par le châssis 2. Il est posé au sol lors d'un essai et mesure l'enfoncement du train de tiges 12 en détectant le passage de repères optiques marqués sur la surface de chacune des tiges du train de tiges 12. Ces moyens de mesure sont aptes à communiquer, après chaque essai, la valeur de l'enfoncement du train de tiges 12 à l'unité électronique de commande 6. Par exemple, la transmission de la valeur d'enfoncement à l'unité 6 peut se faire par voie filaire.

Enfin, le pénétromètre 1 comprend un module 8 de collecte et de traitement des signaux collectés par le capteur. Ce module 8 est une valise d'acquisition, qui est montée sur le châssis 2 pour faciliter la lecture des résultats par l'opérateur. Ainsi, le capteur de mesure de l'enfoncement communique à la fois avec le module de collecte 8 et l'unité de commande 6.

Lors d'un essai, le marteau 22 est soulevé vers le haut par les chaines 26 comme représenté par la flèche F1 à la figure 3.

Comme visible à la figure 4, lorsque le taquet 24 parvient au même niveau axial qu'une fenêtre ouverte, c'est-à-dire une fenêtre dont le battant 161 est libre de basculer, le taquet 24 bascule selon une direction F3 autour de l'arbre 244 sous le poids F2 du marteau 22. Le taquet 24 entraine alors l'ouverture de la fenêtre 160 par basculement F4 du battant 161 autour de la charnière 28. Autrement formulé, le taquet 24 entre en partie dans la fenêtre 160 et la fenêtre forme une fenêtre de dégagement du taquet 24. Le dégagement du taquet 24 entraine la chute du marteau 22 puisque celui-ci n'est plus soutenu par le taquet 24.

La hauteur de chute du marteau 22 correspond donc à la hauteur de la fenêtre ouverte, c'est-à-dire la fenêtre pour laquelle les verrous 35 sont en configuration débloquée. Ainsi, trois hauteurs de chute différentes pour le marteau 22 sont possibles pour le pénétromètre 1. L'énergie de battage peut donc être adaptée en faisant varier la hauteur de chute du marteau 22.

L'unité de commande 6 gère automatiquement l'ouverture des fenêtres 160, en commandant les verrous 35. Plus précisément, l'unité de commande 6 agit sur la détente des ressorts 40, pour déployer ou non les doigts 36 et bloquer ou débloquer l'ouverture des fenêtres 160. De cette manière, l'unité électronique 6 peut changer la hauteur de chute du marteau 22.

La commande sélective du blocage des verrous 35 de chaque fenêtre 160 permet donc de sélectionner précisément la hauteur pour laquelle le marteau 22 va être lâché. Les verrous 35 et les fenêtres 160 forment donc des moyens mécaniques de déclenchement de la chute du marteau 22, ces moyens étant pilotés par l'unité électronique de commande 6. En pratique, les verrous 35 d'une seule fenêtre 160 parmi les fenêtres du mât M sont débloqués.

Lorsque le marteau 22 est lâché, le battant 161 de la fenêtre revient en position fermée par rappel élastique du ressort enroulé sur la charnière 28 et le mouvement de fermeture du battant 161 entraine le basculement, ou redressement du taquet 24. Le ressort enroulé sur la charnière 28 et cette dernière forment donc des moyens de rappel automatique du battant 161 des fenêtres 160 en position fermée.

Lors d'un essai, la hauteur de chute du marteau 22, c'est-à-dire l'énergie de battage fournie au train de tiges 12, est déterminée par l'intermédiaire de la méthode décrite ci-après.

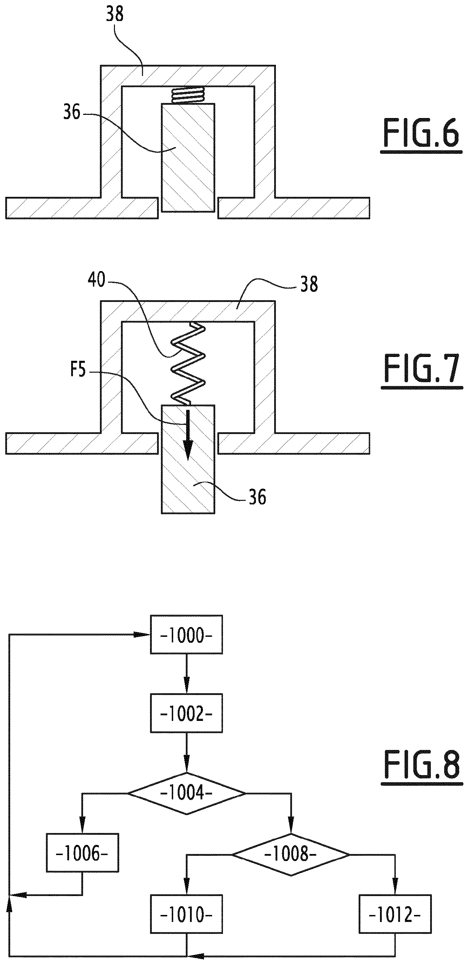

Lors du sondage d'un sol, le premier essai réalisé avec le pénétromètre 1 est un essai réalisé avec une énergie de battage nominale, c'est-à-dire que le marteau 22 est lâché à une hauteur nominale prédéterminée, comme par exemple la hauteur h2. Ce premier essai est représenté par une étape 1000 à la figure 8. Plus généralement, l'étape 1000 représente la réalisation d'un essai pénétromètrique, c'est-à-dire pas uniquement le premier essai mais aussi les essais suivants. Les moyens de mesure de l'enfoncement relèvent alors, lors d'une étape 1002, la valeur d'enfoncement de la pointe du train de tiges 12 dans le sol lors de l'essai.

Les essais pénétromètriques sont considérés comme fiables lorsque la valeur d'enfoncement du train de tiges 12 dans le sol est comprise dans un certain intervalle, notamment entre 2 mm et 20 mm. Il s'agit donc d'un intervalle cible ou de confiance. De cette manière, l'essai réalisé permet d'obtenir des informations très localisées sur la structure, ou la stratification du sol et permet notamment de détecter les couches dites « molles », ou à faible compacité.

L'unité de commande 6 récupère auprès du module de collecte 8 ou du capteur d'enfoncement, la valeur d'enfoncement du train de tiges 12 dans le sol à l'essai précédent et compare, lors d'une étape 1004, cette valeur avec la borne supérieure de l'intervalle, qui est par exemple de 20 mm. Si l'enfoncement est supérieur à 20 mm, l'unité de commande 6 calcule alors, au cours d'une étape 1006, une nouvelle hauteur de chute pour le marteau 22. Plus précisément, cette nouvelle hauteur de chute correspond à une hauteur inférieure à la hauteur nominale, notamment à la hauteur la plus proche. Autrement dit, cette nouvelle hauteur correspond à la hauteur de la fenêtre située directement en dessous de la fenêtre utilisée pour le dégagement du taquet à la hauteur nominale. Dans l'exemple, en partant d'une hauteur nominale h2, la hauteur de chute calculée par l'unité commande 6 pour l'essai suivant est la hauteur h1.

En revanche, si la valeur d'enfoncement de la pointe à l'essai précédent est inférieure à 20 mm, l'unité de commande 6 effectue une comparaison supplémentaire 1008, consistant à comparer la valeur mesurée avec la borne inférieure de l'intervalle, qui est par exemple de 3 mm. Si la valeur mesurée est supérieure à 2 mm, la hauteur de chute adoptée lors des essais précédents est bonne puisqu'elle se situe dans l'intervalle cible et la hauteur de chute n'est pas modifiée pour l'essai suivant.

Cependant, si la valeur d'enfoncement est inférieure à 2 mm, l'énergie de battage est insuffisante. Ainsi, l'unité de commande 6 calcule, lors d'une étape 1010, une nouvelle hauteur de chute pour le marteau 22. Cette nouvelle hauteur de chute est supérieure à la hauteur nominale, et correspond à la hauteur de la fenêtre disposée au dessus de la fenêtre utilisée pour faire chuter le marteau 22 à hauteur nominale. Dans l'exemple, la hauteur passe de la hauteur nominale h2 à la hauteur h3.

Enfin, la nouvelle hauteur sélectionnée lors de l'étape 1006, 1010 ou 1012 est utilisée pour réaliser l'essai suivant, comme représenté par le retour des flèches reliant les étapes 1006, 1010 et 1012 avec l'étape 1000, qui correspond à la réalisation d'un essai. Plus précisément, l'unité électronique 6 envoie un signal de consigne à chaque verrou 35 pour ouvrir la fenêtre correspondant à la hauteur de chute sélectionnée lors de l'étape 1006, 1010 ou 1012.

A l'essai suivant, la valeur d'enfoncement considérée pour la sélection d'une nouvelle hauteur de chute sera la valeur d'enfoncement obtenue avec la hauteur ajustée, c'est-à-dire que la méthode est itérative.

Cet algorithme de calcul de la hauteur de chute du marteau 22 est résolu par le calculateur intégré à l'unité 6 à chaque impact et permet d'obtenir une convergence rapide de la valeur d'enfoncement de la pointe dans l'intervalle ciblé. Ainsi, la majorité des essais résultent en un enfoncement compris dans l'intervalle cible et la hauteur de chute du marteau est adaptée en fonction des propriétés du sol sondé. De cette manière, l'opérateur est sûr que les essais réalisés témoignent de la stratification réelle du sol, c'est-à-dire que les couches de sol « mou », ou à faible compacité sont bien détectées.

En variante non représentée, plusieurs d'essais à énergie de battage constante peuvent être réalisés pour que le module 8 puisse collecter une série de valeurs d'enfoncement. Cette série peut par exemple être formée de trois ou quatre valeurs. Ensuite, la valeur considérée pour l'ajustement de la hauteur de chute du marteau 22 à l'essai suivant peut être la moyenne, la valeur maximale ou encore la valeur minimale de la série.

En variante, des bornes différentes de 2 mm et 20 mm pour l'intervalle cible peuvent être choisies et saisies à l'ordinateur.

En variante non représentée, le battant 161 des fenêtres 160 ne s'ouvre pas par basculement du taquet 24 mais est ouvert directement par l'unité de commande 6.

En variante non représentée, les fenêtres 160 ne sont pas alignées dans le sens de la hauteur, c'est-à-dire qu'elles sont décalées les unes par rapport aux autres dans le sens horizontal. Par exemple, les fenêtres 160 peuvent être agencées en diagonale. Le pénétromètre comporte alors autant de chaines de traction que de fenêtres 160, chaque chaine supportant un taquet. Avec cet agencement, une seule chaine est activée pour faire chuter le marteau à la hauteur sélectionnée.

Les caractéristiques techniques des variantes et modes de réalisation envisagés ci-dessus peuvent être combinées entre elles pour donner de nouveaux modes de réalisation de l'invention.

## Revendications

1. Pénétromètre dynamique lourd (1), comprenant :
- un châssis (2),
- un mât (M), monté sur le châssis et positionné sensiblement à la verticale lors d'un essai,
- un train de tiges (12), comportant une pointe de pénétration dans le sol, qui est disposée à une extrémité (12a) du train de tiges,
- une enclume (13), qui est en appui contre le train de tiges, à une extrémité (12b) opposée à la pointe,
- un marteau (22) de battage de l'enclume,
- des moyens (24, 26, 162, 164) d'élévation du marteau le long du mât jusqu'à une hauteur de chute, à laquelle le marteau est lâché, et
- des moyens de mesure de l'enfoncement de la pointe dans le sol,
**caractérisé en ce que** le pénétromètre comprend en outre :
- une unité électronique (6) de commande de la hauteur de chute du marteau (22), qui est configurée pour sélectionner, parmi plusieurs valeurs prédéterminées (h1, h2, h3), la hauteur de chute à adopter pour l'essai en fonction de l'enfoncement de la pointe mesuré par les moyens de mesure lors d'un ou plusieurs essais antérieurs, et
- des moyens mécaniques (160, 35) de déclenchement de la chute du marteau, qui sont pilotés par l'unité électronique (6) pour que le marteau soit lâché à la hauteur sélectionnée par l'unité électronique de commande (6).

2. Pénétromètre dynamique selon la revendication 1, **caractérisé en ce que** les moyens d'élévation du marteau comprennent un taquet (24) de support du marteau (22) et les moyens mécaniques de déclenchement (160, 35) comprennent des fenêtres (160) de dégagement du taquet, qui sont réparties sur la hauteur du mât (16) et qui sont respectivement situées à différentes hauteurs (h1, h2, h3) correspondant auxdites valeurs prédéterminées, et **en ce que** l'unité électronique (6) commande l'ouverture (F4) des fenêtres.

3. Pénétromètre dynamique selon la revendication 2, **caractérisé en ce que** les fenêtres (160) comprennent chacune un battant (161) articulé sur le mât et **en ce que** les moyens mécaniques de déclenchement (160, 35) comprennent, en outre, des verrous (35) de blocage sélectif de l'ouverture (F4) du battant des fenêtres, qui sont pilotés par l'unité électronique de commande (6).

4. Pénétromètre dynamique selon la revendication 3, **caractérisé en ce que** les verrous (35) comprennent chacun un doigt (36) qui est mobile en translation pour sélectivement bloquer le mouvement d'ouverture (F4) du battant (161) de la fenêtre (160).

5. Pénétromètre dynamique selon la revendication 4, **caractérisé en ce que** les verrous (35) comprennent chacun un ressort (40), configuré pour pousser le doigt (36) contre une surface du battant (161), sous commande de l'unité électronique (6).

6. Pénétromètre dynamique selon l'une des revendications 3 à 5, **caractérisé en ce que** les moyens d'élévation du marteau (22) comprennent, en outre, deux chaines (26) de traction du taquet et **en ce que** le taquet est lié de manière basculante aux chaines et bascule (F3) sous le poids (F2) du marteau dans une fenêtre ouverte lorsqu'il parvient à hauteur de celle-ci.

7. Pénétromètre dynamique selon l'une de revendications 3 à 6, **caractérisé en ce que** le mât comporte des moyens (28) de rappel automatique du battant (161) des fenêtres (160) dans une position fermée.

8. Pénétromètre dynamique selon la revendication 7, **caractérisé en ce que** les moyens de rappel automatique incluent une charnière (28) de basculement du battant (161) et un ressort de rappel du battant en position fermé, qui est enroulé autour de la charnière.

9. Pénétromètre dynamique selon l'une des revendications 2 à 8, **caractérisé en ce que** le taquet comprend des roulements (240) d'appui sur le mât, pour s'élever le long de celui-ci.

10. Méthode pour déterminer, lors d'un essai, la hauteur de chute d'un marteau appartenant à un pénétromètre selon l'une des revendications précédentes, cette méthode étant **caractérisée en ce qu'**elle comprend des étapes consistant à:
a) mesurer (1000) l'enfoncement de la pointe dans le sol lors d'un ou plusieurs essais pour lesquels la hauteur de chute du marteau est maintenue constante, puis
b) en fonction de l'enfoncement mesuré à l'étape a), sélectionner une hauteur de chute pour le marteau parmi les valeurs prédéterminées.

## Patentansprüche

1. Schweres dynamisches Penetrometer (1), umfassend:
- ein Gestell (2),
- einen Mast (M), der an dem Gestell befestigt ist und bei einem Versuch im Wesentlichen senkrecht positioniert ist,
- ein Bohrgestänge (12), das eine Spitze zum Eindringen in den Boden aufweist, die an einem Ende (12a) des Bohrgestänges angeordnet ist,
- einen Amboss (13), der sich an dem Bohrgestänge an einem Ende (12b) entgegengesetzt zur Spitze abstützt,
- einen Schlaghammer (22) des Ambosses,
- Mittel (24, 26, 162, 164) zum Anheben des Hammers längs des Mastes bis zu einer Fallhöhe, in der der Hammer losgelassen wird, und
- Mittel zur Messung des Eindringens der Spitze in den Boden,
**dadurch gekennzeichnet, dass** das Penetrometer außerdem umfasst:
- eine elektronische Einheit (6) zur Steuerung der Fallhöhe des Hammers (22), die ausgebildet ist, unter mehreren vorbestimmten Werten (h1, h2, h3) die Fallhöhe auszuwählen, die für den Versuch abhängig von dem Eindringen der Spitze, das durch die Messmittel bei einem oder mehreren früheren Versuchen gemessen wurde, anzunehmen ist, und
- mechanische Mittel (160, 35) zum Auslösen des Falls des Hammers, die von der elektronischen Einheit gesteuert werden, damit der Hammer bei der von der elektronischen Steuereinheit gewählten Höhe losgelassen wird.

2. Dynamisches Penetrometer nach Anspruch 1, **dadurch gekennzeichnet, dass** die Mittel zum Anheben des Hammers einen Abstützklotz (24) für den Hammer (22) umfassen und die mechanischen Auslösemittel (160, 35) Fenster (160) zur Freigabe des Klotzes, die über die Höhe des Mastes (16) verteilt sind und die jeweils in unterschiedlichen Höhen (h1, h2, h3) entsprechend den vorbestimmten Werten angeordnet sind, umfassen und dass die elektronische Einheit (6) das Öffnen (F4) der Fenster steuert.

3. Dynamisches Penetrometer nach Anspruch 2, **dadurch gekennzeichnet, dass** die Fenster (116) jeweils einen an dem Mast angelenkten Flügel (161) umfassen und dass die mechanischen Auslösemittel (160, 35) außerdem Riegel (35) zur selektiven Blockierung der Öffnung (F4) des Flügels der Fenster umfassen, die von der elektronischen Steuereinheit (6) gesteuert werden.

4. Dynamisches Penetrometer nach Anspruch 3, **dadurch gekennzeichnet, dass** die Riegel (35) jeweils einen Finger (36) umfassen, der translatorisch beweglich ist, um selektiv die Bewegung des Öffnens (F4) des Flügels (161) des Fensters (160) zu blockieren.

5. Dynamisches Penetrometer nach Anspruch 4, **dadurch gekennzeichnet, dass** die Riegel (35) jeweils eine Feder (40) umfassen, die ausgebildet ist, den Finger (36) gegen die Fläche des Flügels (161) bei Steuerung durch die elektronischen Einheit (6) zu drücken.

6. Dynamisches Penetrometer nach einem der Ansprüche 3 bis 5,
**dadurch gekennzeichnet, dass** die Mittel zum Anheben des Hammers (22) außerdem zwei Ketten (26) zum Ziehen des Klotzes umfassen und dass der Klotz in schwenkender Weise mit den Ketten verbunden ist und unter dem Gewicht (F2) des Hammers in ein offenes Fenster schwenkt (F3), wenn er auf die Höhe desselben kommt.

7. Dynamisches Penetrometer nach einem der Ansprüche 3 bis 6,
**dadurch gekennzeichnet, dass** der Mast Mittel (28) zur automatischen Rückstellung des Flügels (161) der Fenster (160) in die geschlossene Stellung aufweist.

8. Dynamischer Penetrometer nach Anspruch 7, **dadurch gekennzeichnet, dass** die automatischen Rückstellmittel ein Scharnier (28) zum Schwenken des Flügels (161) und eine um das Scharnier gewickelte Feder zum Rückstellen des Flügels in die geschlossene Stellung einschließen.

9. Dynamisches Penetrometer nach einem der Ansprüche 2 bis 8,
**dadurch gekennzeichnet, dass** der Klotz Rollen (240) zum Abstützen an dem Mast umfasst, um sich entlang desselben anzuheben.

10. Verfahren zum Bestimmen der Fallhöhe eines Hammers während eines Versuchs, der zu einem Penetrometer nach einem der vorhergehenden Ansprüche gehört, wobei dieses Verfahren **dadurch gekennzeichnet ist, dass** es die folgenden Schritte umfasst:
a) Messen (1000) der Eindringtiefe der Spitze in den Boden bei einem oder mehreren Versuchen, für die die Fallhöhe des Hammers konstant gehalten wird, dann
b) abhängig von der im Schritt a) gemessenen Eindringtiefe Auswählen einer Fallhöhe für den Hammer aus den vorbestimmten Werten.

## Claims

1. A heavy dynamic penetrometer (1), comprising:
- a chassis (2),
- a mast (M), mounted on the chassis and positioned to be substantially vertical during a test,
- a rod string (12), including a tip for penetrating the ground, which is positioned at one end (12a) of the rod string,
- an anvil (13), which bears against the rod string, at an end (12b) opposite the tip,
- a hammer (22) for striking the anvil,
- means (24, 26, 162, 164) for raising the hammer along the mast up to a fall height, at which the hammer is released, and
- means for measuring pushing of the tip into the ground,
**characterized in that** the penetrometer further comprises:
- an electronic control unit (6) for controlling the fall height of the hammer (22), which is configured to select, from among several predetermined values (h1, h2, h3), the fall height to be adopted for the test based on the pushing in of the tip measured by the measuring means during one or more earlier tests, and
- mechanical means (160, 35) for triggering the fall of the hammer, which are controlled by the electronic unit (6) so that the hammer is released at the selected height of the electronic control unit (6).

2. The dynamic penetrometer according to claim 1, **characterized in that** the means for raising the hammer comprise a support stop (24) for the hammer (22) and the mechanical triggering means (160, 35) comprise windows (160) for releasing the stop, which are distributed over the height of the mast (16) and which are respectively situated at different heights (h1, h2, h3) corresponding to said predetermined values, and **in that** the electronic unit (6) controls the opening (F4) of the windows.

3. The dynamic penetrometer according to claim 2, **characterized in that** the windows (160) each comprise a wing (161) articulated on the mast and **in that** the mechanical triggering means (160, 35) further comprise bolts (35) for selectively blocking the opening (F4) of the wing of the windows, which are controlled by the electronic control unit (6).

4. The dynamic penetrometer according to claim 3, **characterized in that** the bolts (35) each comprise a finger (36) translatable to selectively block the opening movement (F4) of the wing (161) of the window (160).

5. The dynamic penetrometer according to claim 4, **characterized in that** the bolts (35) each comprise a spring (40), configured to push the finger (36) against a surface of the wing (161), under the control of the electronic unit (6).

6. The dynamic penetrometer according to one of claims 3 to 5, **characterized in that** the means for raising the hammer (22) further comprise two pull chains (26) of the stop and **in that** the stop is connected in a tilting manner to the chains and tilts (F3) under the weight (F2) of the hammer in an open window when it reaches the height thereof.

7. The dynamic penetrometer according to one of claims 3 to 6, **characterized in that** the mast comprises means (28) for automatically returning the wing (161) of the windows (160) to a closed position.

8. The dynamic penetrometer according to claim 7, **characterized in that** the automatic return means include a tilting hinge (28) of the wing (161) and a return spring for returning the window to the closed position, which is wound around the hinge.

9. The dynamic penetrometer according to one of claims 2 to 8, **characterized in that** the stop comprises rolling bearings (240) bearing on the mast, to rise along the latter.

10. A method for determining, during a test, the fall height of a hammer belonging to a penetrometer according to one of the preceding claims, said method being **characterized in that** it comprises the following steps:
a) measuring (1000) the pushing of the tip into the ground during one or more tests for which the fall height of the hammer is constant, then
b) based on the pushing in measured in step a), selecting a fall height for the hammer from among the predetermined values.
